# EUROPEAN PATENT APPLICATION

(11) **EP 4 542 687 A1**
(43) Date of publication of application: **23.04.2025**
(21) Application number: 24207499.5
(22) Date of filing: 18.10.2024
(51) Int. Cl.: H01M 4/62, H01M 10/12, H01M 50/474, H01M 50/486, H01M 50/489

(54) **TUBULAR GAUNTLETS FOR DEEP CYCLE LEAD-ACID BATTERIES**

(30) Priority: 20.10.2023 US 202318382404
(71) Applicant: Johns Manville, Denver, CO 80202 (US)
(72) Inventor: Zhihua, Guo, Ottawa Hills, 43615 (US); Rui, Ferreira, Boulder, 80301 (US)
(74) Representative: Dörr, Klaus

(57) **Abstract**

A battery cell, comprising a wet-laid nonwoven gauntlet defining a chamber, a plurality of polymeric fibers, a binder, and a positive active material housed in the chamber. The plurality of polymeric fibers have a linear mass density of between about 0.5 denier and 13.0 denier, and a length of between about 5 mm and 50 mm. The binder has a binder add-on percentage of between about 5% and 30%. The wet-laid nonwoven gauntlet has a basis weight with a coefficient of variation between about 1% and 5%.

## Description

### BACKGROUND

Lead-acid batteries are widely used because of their reliability and relatively low cost. For example, most automobiles include a lead-acid battery to start the engine and power various onboard systems. Although there are many types of lead-acid batteries, their general construction includes "positive" and "negative" electrodes (e.g., lead or lead alloy electrodes) in contact with an acid electrolyte, typically dilute sulfuric acid. During discharge, the lead-acid battery produces electricity as the sulfuric acid reacts with the electrodes. Specifically, the acid electrolyte combines with the negative and positive electrodes to form lead sulfate. As lead sulfate forms, the negative electrode releases electrons and the positive plate loses electrons. The net positive charge on the positive electrode attracts the excess negative electrons from the negative electrode enabling the battery to power a load. To recharge the acid-battery, the chemical process is reversed. However, as lead sulfate forms on the positive electrode, the positive electrode gradually loses the ability to attract electrons from the negative electrode reducing the ability of the cell to continue the chemical reaction and produce power. Accordingly, it is desirable for a positive electrode design that allows for improved electron flow.

### SUMMARY

An aspect of the disclosure provides for a battery cell, comprising a wet-laid nonwoven gauntlet defining a chamber, a plurality of polymeric fibers, a binder, and a positive active material housed in the chamber. The plurality of polymeric fibers have a linear mass density of between about 0.5 denier and 13.0 denier, and a length of between about 5 mm and 50 mm. The binder has a binder add-on percentage of between about 5% and 30%. The wet-laid nonwoven gauntlet has a basis weight with a coefficient of variation between about 1% and 5%. The binder may comprise one or both of an acrylic-based binder and a styrene butadiene-based binder. The plurality of polymeric fibers may comprise one or more of PET fibers, acrylic fibers, polyester fibers, and polypropylene fibers. The gauntlet may include a tubular shape defining the chamber. The battery cell may further comprise a negative electrode electrically coupled to the gauntlet. The negative electrode may include a plate coupled with a negative active material. The negative electrode may include a negative terminal that electronically couples the negative electrode to the gauntlet. The battery cell may further comprise a separator positioned between the negative electrode and the gauntlet. The separator may include a microporous membrane made out of a polymeric film. The gauntlet may be one of a plurality of gauntlets, each of the gauntlets coupled together through one of an adhesive or thread.
Thus, the wet-laid nonwoven gauntlet according to the instant invention can be glassless and the term glassless means substantially or fully free of glass material and substantially means less than 10 wt.-% of glass fibers, preferably less than 8% glass fibers, more preferred less than 6% glass fibers, in particular less than 4% glass fibers, or in particular preferred less than 2% glass fibers
Thus, the wet-laid nonwoven gauntlet according to the instant invention, after curing, may include between at least 60 wt.-% polymeric fibers and up to 100 wt.-% polymeric fibers, preferably between at least 70 wt.-% polymeric fibers and up to 100 wt.-% polymeric fibers. The wet-laid nonwoven gauntlet according to the instant invention, after curing, may include between at least 5 wt.-% binder and up to 30 wt.-% binder. The binder is in the cured state and means solid binder.

Another aspect of the disclosure provides for a method of manufacturing a battery cell, comprising forming a wet-laid nonwoven gauntlet defining a chamber. The wet-laid nonwoven gauntlet comprises a plurality of polymeric fibers and a binder. The plurality of polymeric fibers have a linear mass density of between about 0.5 denier and 13.0 denier, and a length between about 5 mm and 50 mm. The binder has a binder add-on percentage of between about 5% and 30%. The wet-laid nonwoven gauntlet has a basis weight with a coefficient of variation between about 1% and 5%. The method further comprises inserting a positive active material in the chamber. The binder may comprise one or both of an acrylic-based binder and a styrene butadiene-based binder. The plurality of polymeric fibers may comprise one or more of PET fibers, acrylic fibers, polyester fibers, and polypropylene fibers. The gauntlet may be formed to include a tubular shape defining the chamber. The method may further comprise electrically coupling a negative electrode to the gauntlet. The negative electrode may include a plate coupled with a negative active material. The negative electrode may include a negative terminal that electronically couples the negative electrode to the gauntlet. The method may further comprise positioning a separator between the negative electrode and the gauntlet. The gauntlet may be one of a plurality of gauntlets, and the method further may comprise forming each of the gauntlets through one of an adhesive or thread.

Another aspect of the disclosure provides for a mat, comprising a plurality of polymeric fibers and a binder. The plurality of polymeric fibers have a linear mass density of between about 0.5 denier and 13.0 denier, and a length of between about 5 mm and 50 mm. The binder has a binder add-on percentage of between about 5% and 30%. The mat has a basis weight with a coefficient of variation between about 1% and 5%.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 illustrates an example cured mat according to one aspect of the disclosure.
FIG. 2A illustrates a perspective view of an example battery cell according to one aspect of the disclosure.
FIG. 2B illustrates a cross-sectional view of the battery cell of FIG. 2A.
FIG. 3A illustrates a schematic view of a method of manufacturing the cured mat of FIG. 1 according to one aspect of the disclosure.
FIG. 3B illustrates a schematic view of post-processing the mat manufactured by the method of FIG. 3A.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

One means of addressing the formation of lead sulfate in battery cells is by designing a battery to include a positive electrode formed of gauntlets wrapped about a positive active material (e.g., lead dioxide). The gauntlets may be conductive such that electrons from the negative electrode may continue to flow to the positive active material despite the formation of the lead sulfate. Examples of such gauntlets may be described in U.S. Patent No. 10,957,913 entitled "Gauntlet Lead-Acid Battery Systems" and U.S. Patent Application No. 15/812,792 entitled "Polymer Fiber-Containing Mats with Additives for Improved Performance of Lead Acid Batteries," each which are incorporated by reference herein in their entirety.

However, conventional mats for the gauntlet are produced using spunbond processes and/or other processes that result in mats with relatively non-uniform thickness, surface finish, and/or basis weight. In particular, the fibers are extruded from fine capillaries, attenuated and cooled, and deposited on a collecting device (e.g., a moving belt). As the belt is moving, the fibers extruded on the belt may intrinsically lead to a mat having a non-uniform thickness and basis weight. Such a lack of uniformity may cause the battery to have a non-uniform resistance along a length of the battery when the non-uniform mat is used to form the gauntlet. This non-uniform resistance, in turn, may lead to a non-uniform and inefficient current output. Accordingly, it is desirable to manufacture mats used in battery gauntlets to be more uniform.

The present disclosure is directed to producing a wet-laid, nonwoven mat. Such a mat may be more uniform in basis weight than other mats as the wet-laid process may orient the fibers in a more random pattern. Specifically, cut fibers are added with a process liquid to form a slurry, which is laid down on the forming belt with the fibers inherently having a randomized direction. Accordingly, the fibers are laid down in a randomized manner, which can aid in averaging out the varying directions of the cut fibers along the length of the mat to provide a more uniform basis weight. This greater uniformity and material composition may address a number of the concerns noted above.

### I. EXAMPLE MAT

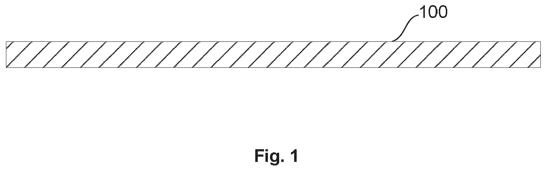

FIG. 1 depicts a simplified cross-sectional view of an example cured mat 100. As will be discussed in greater detail below, the mat 100 may be formed from a wet-laid process such that the mat 100 is a nonwoven, wet-laid mat. The mat 100 may be made of a material including fibers adhered together with a binder. The fibers of the mat 100 may be 100% polymer fibers, without any glass fibers. However, in other embodiments, the fibers of the mat 100 may be substantially glassless. For example, the mat 100 may be substantially glassless when the mat 100 includes less than about 10% glass fibers, less than about 8% glass fibers, less than about 6% glass fibers, less than about 4% glass fibers, or less than about 2% glass fibers. The mat 100 may be fully glassless when the mat 100 includes no glass fibers. The mat 100 formed of synthetic polymeric fibers provides a soft surface that may be grasped by an end user without the end user dealing with any itchiness as may occur when using glass fibers. Additionally, by making mat 100 with polymeric fibers, rather than glass fibers, the mat 100 may be more easily recycled than similar glass mats, making the mat 100 more environmentally friendly than traditional glass mats. In some embodiments, the mat 100 may be a single layer, while in other embodiments the mat 100 may be formed of two or more layers.

The polymeric fibers of the wet-laid nonwoven gauntlet, in particular mat 100, may be formed from any polymeric material. For example, the polymeric fibers may be acrylic fibers, polyester fibers, polypropylene fibers, aramid fibers, nylon fibers, polyethylene fibers, rayon fibers, polyvinylidene fluoride (PVDF) fibers, polyethylene terephthalate (PET) fibers, and/or other polymeric fibers. In one particular embodiment, the polymeric fibers may be low shrink grade PET fibers. The polymeric fibers may be chopped fibers in some embodiments. Where the mat 100 includes multiple layers, each layer may be a different material. For example, one layer may be PET while another layer may be polyethylene. The polyethylene layer may advantageously offer to the mat 100 the additional hydrophobicity.

The polymeric fibers of the wet-laid nonwoven gauntlet, in particular mat 100, may have linear mass densities of between about 1.0 denier and 10.0 denier, such as between about 1.0 denier and 9.0 denier, such as between about 1.1 denier and 6.0 denier, such as between 1.2 denier and 4.0 denier, or between about 1.5 denier and 3.0 denier. Since denier is dependent on the density of the polymer, at 3.0 denier, the polymeric fibers may have a diameter between about 10-25 µm, such between about 12-23 µm, between about 15-20 µm, or between about 17-19 µm. Larger PET fibers (up to 25 denier) can be blended (as a minor component) to make the mat stiffer and therefore imparting better dimensional stability performance. For example, the wet-laid nonwoven gauntlet, in particular mat, 100 may include between about 5% and 50%, oftentimes between about 15% and 30%, of coarse fibers (e.g., fibers having linear mass densities of greater than about 4.0 denier, oftentimes, between about 4.0 denier and 25 denier, more often between about 8 denier and 15 denier). In embodiments with coarse fibers, the wet-laid nonwoven gauntlet, in particular mat 100, may include between about 50% and 95% (e.g., between 70% and 85%) of the finer fibers having linear mass densities up to 4.0 denier as described above. The polymeric fibers may have lengths of between about between about 3 mm and 100 mm, such as lengths between about 6 mm and 25 mm, lengths of between about 12 mm and 20 mm, and lengths of between about 15 mm and 18 mm. Fibers with higher linear mass densities and/or longer fibers may provide greater dimensional stability to the wet-laid nonwoven gauntlet, in particular mat. Particular examples of fiber dimensions that have been shown to provide the mat 100 with good basis weight uniformity include 1.5 denier at 0.5 inches (or around 12.7 mm) in length, 2.0 denier at around 0.6 inches (or around 15 mm) in length, and 3 denier at around 0.75 inches (or around 19.05 mm).
Typically, the linear mass densities of the fibers can be determined in accordance with DIN EN ISO 1973:1995-12 (vibroscope method).

The polymeric fibers, which may be substantially the same size or may include a blend of differently sized fibers. For example, differently sized fibers may form layers of different densities within the wet-laid nonwoven gauntlet, in particular mat 100. In embodiments in which the wet-laid nonwoven gauntlet, in particular mat 100, is formed from a combination of differently sized fibers, the different sized fibers may be homogenously dispersed or distributed throughout the material.

As indicated above, the use of larger polymeric fibers helps increase the dimensional stability of the wet-laid nonwoven gauntlet, in particular mat 100. The binder may be selected to further enhance the dimensional stability of the wet-laid nonwoven gauntlet, in particular mat 100. The binder is typically homogenously, or relatively evenly dispersed or distributed throughout the wet-laid nonwoven gauntlet, in particular mat 100. To help contribute to the dimensional stability, the binder may exhibit high cross-linking ability, which may increase the tensile strength and stiffness of the wet-laid nonwoven gauntlet, in particular mat 100, to improve the dimensional stability. To achieve the necessary cross-linking, the binder may include a self-cross-linking material (e.g., a self-crosslinking acrylic latex) and/or include a cross-linking additive. A hot/wet% may be indicative of the cross-linking ability of the binder. In some embodiments, a hot/wet% of the binder may be at least or about 30%, at least or about 35%, at least or about 40%, at least or about 45%, at least or about 50%, at least or about 55%, at least or about 60%, at least or about 65%, at least or about 70%, or more.

The wet-laid nonwoven gauntlet, in particular mat 100, includes one or more binders that bind the respective fibers together to form the mat 100. The wet-laid nonwoven gauntlet, in particular mat 100, after curing, may include between at least 60 wt.-% polymeric fibers and up to 100 wt.-% polymeric fibers, preferably between at least 70 wt.-% polymeric fibers and up to 100 wt.-% polymeric fibers. Possible subranges may include between about 50-95% of polymeric fibers, by weight, such as between 55-90%, between about 60-85%, between about 65-80%, between about 70-75%, or about 70%. The wet-laid nonwoven gauntlet, in particular mat 100, after curing, may include between at least 5 wt.-% binder and up to 30 wt.-% binder. The binder is in the cured state and means solid binder. Possible subranges may include about 5-50% of binder, by weight, such as between about 10-45%, between about 15-40%, between about 20-35%, or between about 25-30%. In one example, the wet-laid nonwoven gauntlet, in particular mat 100, may include about 30% binder and 70% fiber by weight. This design has been shown to have particularly good strength and surface quality (e.g., minimal surface defects, such as wrinkles, undispersed fibers, holes, or the like). The binder may lose weight transitioning from an uncured state to a cured state (i.e., a binder add-on percentage). For example, the binder may have a binder add-on percentage of about 15% total weight, at least or about 20% total weight, at least or about 25% total weight, at least or about 30% total weight, at least or about 35% total weight, or more, which may further help increase the tensile strength and dimensional stability of the wet-laid nonwoven gauntlet, in particular mat 100.

The binder may be selected to have a relatively low cure temperature, as subjecting the wet-laid nonwoven gauntlet, in particular mat 100, to high processing temperatures may lead to the formation of wrinkles and/or other defects within the wet-laid nonwoven gauntlet, in particular mat 100, that may lead to a lack of basis weight uniformity. For example, the binder may have a cure point that is less than or about 350 °F, less than or about 325 °F, less than or about 300 °F, less than or about 275 °F, less than or about 250 °F, less than or about 225 °F, or less. Such temperatures may enable a curing process for the wet-laid nonwoven gauntlet, in particular mat 100, to be conducted at a sufficiently low temperature so as to not generate wrinkles. In one example, the curing temperature for the binder may be between 300-320 °F. Using binders with such a low curing temperature may be beneficial where the mat 100 is made substantially of polymeric fibers as, at higher temperatures, the polymeric fibers may wrinkle, which may lead to a more wrinkled and uneven wet-laid nonwoven gauntlet, in particular mat 100.

The binder may be based on acrylic and/or styrene butadiene chemistry, or other common binder chemistries. The binder may be or include an acrylic copolymer latex. For example, the binder may contain RD-H125K (supplied by H.B. Fuller), CR-M90 (supplied by H.B. Fuller), and/or JM-106 (supplied by The Dow Chemical Company). For example, in some embodiments, the binder may be a thermoset binder based on urea formaldehyde (UF), melamine formaldehyde (MF), polyacrylic acid, sugar, and/or other binders.

In some embodiments, an additive may be included that may help enhance the wettability of the binder to polymeric fibers and may improve bondage and/or strength. For example, the binder may include a starch solution additive. In some embodiments, the additive may include glycol ester and/or an amine oxide-based material such as Mykon^{®} NRW-3 (supplied by Omnova Solutions). When present, the mat 100 may include between about 0.01 and 3 wt. % of the wettability additive, which may reduce the surface energy of the polymeric fibers to enhance adhesion.

In one example binder, the binder may have a composition of acrylic latex (e.g., an acrylic copolymer latex, such as Hycar^{®} 26138) and a formaldehyde-based cross-linking additive (e.g., a melamine formaldehyde-based cross-linking additive, such as Aerotex^{®} 3030 or Resimene^{®} AQ-7551). For example, the binder may include between about, by weight after curing, 90-99% acrylic latex, such as between about 92-98.5% acrylic latex, between about 93-98%, or about 97.5% acrylic latex. The binder may further include between about 1-10% of formaldehyde-based cross-linking additive, such as between about 1.5-8%, between about 2-6%, or about 2.5%. A formaldehyde free crosslinker can be used as well.

In another example binder, the binder may have a composition of polyacrylic acid and liquid starch (e.g., RediBOND^{®} 5330). For example, the binder may include between about, by weight, 85-95% of polyacrylic acid, such as between about 86-94%, between about 87-93%, between about 88-92%, or about 89% of polyacrylic acid. The binder may further include between about 5-15% of liquid starch, such as between about, by weight, 5-15% of liquid starch, such as between about 6-14%, between about 7-13%, between about 8-12%, or about 11% of liquid starch. In yet other embodiments, the binder may be based on sorbitol and/or dextrose. As will be discussed further below, binders with a crosslinker, such as Aerotex^{®} 3030, may lead to higher wrinkles (and, therefore, less basis weight uniformity) because the crosslinker may require a higher temperature during the curing process. In one example, the binder may be a polyacrylic acid-based binder, such as JM-106.

In certain embodiments, the binder may have various additives provided to increase the various material properties of the mat 100. For example, the binder may include additives to provide the mat 100 with a level of flame retardancy.

In some embodiments, the wet-laid nonwoven gauntlet, in particular mat 100, may have a thickness of between about 0.1 mm and 3 mm, commonly between about 0.15 mm and 2 mm, more commonly between about 0.2 mm and 1 mm. The wet-laid nonwoven gauntlet, in particular mat 100, may have a basis weight of between or about 0.2 Ibs/100 ft² and 4.0 lbs/100 ft², between or about 0.55 lbs/100 ft² and 3.5 lbs/100 ft², between or about 0.6 lbs/100 ft² and 3.0 lbs/100 ft², between or about 0.65 lbs/100 ft² and 2.5 lbs/100 ft², between or about 0.7 lbs/100 ft² and 2.0 lbs/100 ft², or between or about 0.75 lbs/100 ft² and 1.5 lbs/100 ft². The wet-laid nonwoven gauntlet, in particular mat 100, may have a machine direction tensile strength of between about 10 lbf//3 in and 300 Ibf/3 in, between about 20 Ibf/3 in and 250 Ibf/3 in, between about 30 Ibf/3 in and 200 Ibf/3 in, between about 40 Ibf/3 in and 150 Ibf/3 in, between about 50 Ibf/3 in and 125 Ibf/3 in, between about 55 Ibf/3 in and 115 Ibf/3 in, or between about 60 Ibf/3 in and 110 Ibf/3 in. The wet-laid nonwoven gauntlet, in particular mat 100, may have a cross-machine direction tensile strength of between about 6 Ibf/3 in and 300 Ibf/3 in, between about 10 Ibf/3 in and 250 Ibf/3 in, between about 20 Ibf/3 in and 200 Ibf/3 in, between about 30 Ibf/3 in and 150 Ibf/3 in, between about 35 Ibf/3 in and 90 Ibf/3 in, between about 40 Ibf/3 in and 80 Ibf/3 in, or between about 45 Ibf/3 in and 70 Ibf/3 in. The wet-laid nonwoven gauntlet, in particular mat 100, may have a total tensile strength of between about 16 Ibf/3 in and 600 Ibf/3 in, between about 30 Ibf/3 in and 550 Ibf/3 in, between about 60 Ibf/3 in and 500 Ibf/3 in, between about 90 Ibf/3 in and 450 Ibf/3 in, between about 120 Ibf/3 in and 400 Ibf/3 in, between about 150 Ibf/3 in and 350 Ibf/3 in, or between about 200 Ibf/3 in and 300 Ibf/3 in. The wet-laid nonwoven gauntlet, in particular mat 100, may have a machine direction stiffness of between or about 2 g cm to 150 g cm, between or about 4 g cm to 125 g cm, between or about 6 g cm to 100 g cm, between or about 8 g cm to 75 g cm, between or about 10 g cm to 40 g cm, or between or about 15 g cm to 30 g cm. The wet-laid nonwoven gauntlet, in particular mat 100, may have a cross-machine direction stiffness of between or about 2 g cm to 100 g cm, between or about 5 gm cm to 75 g cm, between or about 10 g cm to 40 g cm, or between or about 15 g cm to 30 g cm. The wet-laid nonwoven gauntlet, in particular mat 100, may have an air permeability of at least or about 50 cubic feet per minute per square foot (CFM/ft²), at least or about 150 CFM/ft², at least or about 250 CFM/ft², at least or about 400 CFM/ft², at least or about 500 CFM/ft², at least or about 600 CFM/ft², at least or about 650 CFM/ft², at least or about 700 CFM/ft², at least or about 750 CFM/ft², at least or about 800 CFM/ft², at least or about 850 CFM/ft², at least or about 900 CFM/ft², at least or about 950 CFM/ft², at least or about 1000 CFM/ft², or more.

In some embodiments, the wet-laid nonwoven gauntlet, in particular mat 100, may be formed as a single layer. In other embodiments, the wet-laid nonwoven gauntlet, in particular mat 100, may be formed of two or more layers of polymeric fibers (e.g., seven layers). In such embodiments, each layer may be identical and/or some layers may be different. For example, one or more of the layers may use different polymeric fibers (a different type of fiber, different fiber diameter, different length, etc.), a different binder, and/or a different polymer/binder ratio, etc.

The wet-laid nonwoven gauntlet, in particular mat 100, may include one or more layers of fibers made in a single step or process. In other words, in embodiments in which the wet-laid nonwoven gauntlet, in particular mat 100, includes multiple layers, such layers may not be separately formed and then combined in a later stage or process (i.e., separately made and then bonded together). Rather, the layers are formed simultaneously, which results in a wet-laid nonwoven gauntlet, in particular mat 100, that functions as a single layer in terms of structure and integrity despite having different fiber compositions and/or layer densities. For example, the wet-laid nonwoven gauntlet, in particular mat 100, may be made using a wet-laid process, as described below. Such a process may produce a more uniform wet-laid nonwoven gauntlet, in particular mat, in basis weight, which may provide more uniform material properties across the wet-laid nonwoven gauntlet, in particular mat 100, when the such material is used in a product (e.g., a more uniform thickness across the product or more aesthetic appearance). Accordingly, the materials discussed may be produced at lower cost and in less time.

As noted above, the wet-laid nonwoven gauntlet, in particular mat 100, may have a basis weight with high uniformity. This may be due to the wet-laid, non-woven process of forming the wet-laid nonwoven gauntlet, in particular mat 100, as well as the specific composition of the material. Specifically, the wet-laid nonwoven gauntlet, in particular mat 100, may have a basis weight with a low coefficient of variation (CV), which is the ratio of the standard deviation to a given mean value and shows the extent of variability in relation to that mean. The CV may be determined by measuring the basis weight for multiple samples (e.g., 30-60 samples) to determine the mean, standard deviation, and CV of the basis weight of all the samples. Typically, at least 30 samples are taken. While spunbond mats may have a high CV in the range of 5-10% (e.g., 7.1% for certain mats), the mat 100 may have a lower CV of between about 1-5%, such as between about 2-5%, or about 3%.
To such extent not already specified, all percentage values refer to weight %.
To such extent not already specified, all percentage values disclosed in the context of the wet-laid nonwoven gauntlet, in particular mat 100, refer to the total weight of the wet-laid nonwoven gauntlet, in particular mat 100.

### EXAMPLE 1

Nonwoven mats with PET (Polyethylene terephthalate) fibers having 1.5 denier (D) were produced using a pilot mat machine. The tested PET fibers in this example include: 6 mm fibers supplied by Engineered Fibers Technology, LLC (EFT); 10 mm fibers supplied by EFT; 15 mm supplied by EFT; %" fibers supplied by William Barnet & Son, LLC (Barnet); 1" fibers supplied by Barnet. Binder 1 contained Hycar^{®} 26138 and Aerotex^{®} 3030. Binder 2 contained JM106 (Polyacrylic acid based thermoset binder) and RediBond^{®} 5330. Binder 3 contained 90% Hycar^{®} 26138 and 10% RediBond^{®} 5330. Binder 4 contained just Hycar^{®} 26138. A two-zone oven was equipped with the pilot wet-laid machine. The two zones were set at 330 °F and 380 °F, respectively, for Binders 1 and 2. The two zones were set at 210 °F and 225 °F, respectively, for Binder 3 and 4. The line speed was 10 feet per minute (fpm) line speed. Table 1 details the comparison of the resultant mats.

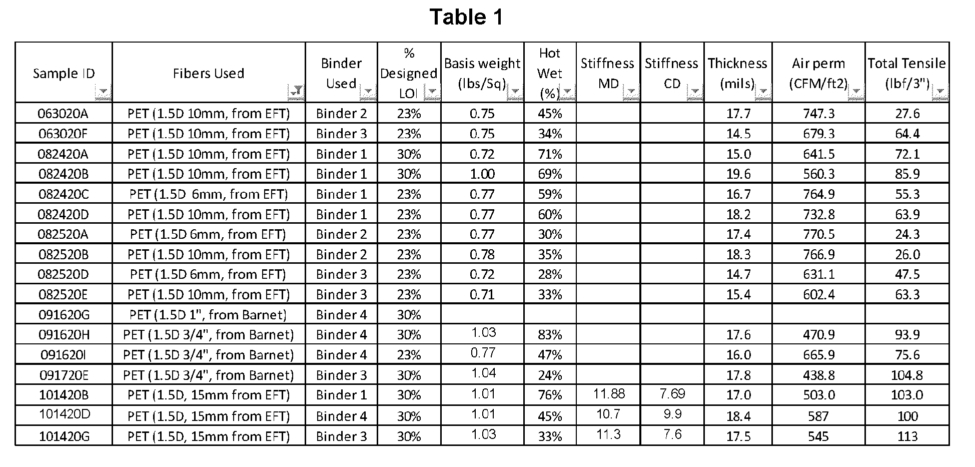

As detailed above, several physical properties were tested for each mat and compared to data from the commercially available glass flooring mats. Basis weight was measured by weighing of handsheet samples (typically cut 12"X12") with the unit Ibs/sq (i.e., lbs/100 sq. ft2). Tensile strength of (3"X12") (Ibf/3") was measured using American Society for Testing and Materials (ASTM) method by an Instron machine in accordance with ASTM D5035-11(2019) : Standard Test Method for Breaking Force and Elongation of Textile Fabrics (Strip Method). Tensile strength was measured in the machine direction (MD) and the cross-machine direction (CD). Total tensile is the sum of the two. For hot/wet (%) testing, 3"X12" strips need to be submerged in water bath with Deionized (DI) water at 81° ± 1° C (180°± 2° F) for 10 minutes. Typically, strips from cross machine (CD) direction are used. Hot Wet (%) is average of CD wet tensile strength divided by average of CD dry tensile strength. Thickness was measured with a gauge under pressure of 1.686 kPa (28 ounce (784 gram) contact pressure and 3 inch diameter foot) and as outlined in TAPPI T4411, except for the pressure (instead of 50kPa the aforementioned pressure was used). Air permeability ("air perm") was measured by the Frazier test, which is described by ASTM Standard Method D737. This test was carried out at a differential pressure of about 0.5 inches of water (125 Pa differential pressure). Stiffness test was conducted according to a Technical Association of the Pulp and Paper Industry (TAPPI) method T 489 om-08. LOI means the amount of cured binder being present.

From the data, it showed that, when controlling for binders used, a longer fiber, higher binder add-on percentage, higher basis weight all helped increase tensile strength of the PET mats. Such an increased tensile strength may be useful to increase the machine speed at which the mat is manufactured or used, which leads to a higher operation efficiency, higher throughput, and lower cost. In particular, none of the tested mats in this example had wrinkled fibers (as seen visually) except for sample "101420B." This sample had the highest length of fiber from EFT while using a Binder 1 binder, which resulted in wrinkles in the machine direction. Accordingly, the 1.5 D PET fiber with the noted lengths and binders (except Binder 1) produces mats with no wrinkles and, therefore, greater basis weight uniformity.

### Example 2

Nonwoven mats with PET fibers having 3.0 D were produced using a pilot mat machine including similar settings as used in Example 1. The tested PET fibers in this example include: 18 mm fibers supplied by EFT; %" fibers supplied by MiniFIBERS; and 1" fibers supplied by MiniFIBERS.

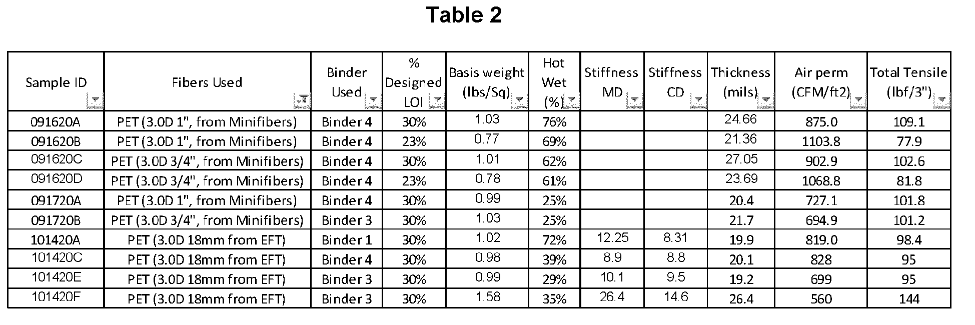

From the data, it showed that, when controlling for binders used, a longer fiber, higher binder add-on percentage, higher basis weight all helped increase tensile strength of the PET mats. Fiber bundles were formed when 1" fibers were used, such as for samples 091620A, 091620B, and 091720A. This suggests that a 1" fiber length was too long to achieve good dispersion. On the other hand, mats using 3.0D, ¾" (or 18 mm) PET fibers may be manufactured with good dispersion and minimum amount of defects when the temperature is less than 330 °F, such as between about 270 °F and 320 °F, such as between about 280 °F and 310 °F, such as between about 290 °F and 300 °F.

### Example 3

Nonwoven mats with PET fibers having a mix of dimensions were produced using a pilot mat machine including similar settings as used in Example 1. The percentages of fibers noted in the below list are by weight. The tested PET fibers in this example include: 85% of fibers are 1.5 D, 6 mm supplied by EFT and 15% of fibers are 13D, ½" supplied fibers by Barnett; 85% of 1.5 D, 10 mm fibers supplied by EFT and 15% of fibers are 13D, ½" supplied fibers by Barnett; 85% 3.0 D, %" fibers supplied by MiniFIBERS and 15% of fibers are 13D, ½" supplied fibers by Barnett; 85% 3.0 D, 1" fibers supplied by MiniFIBERS and 15% of fibers are 13D, ½" supplied fibers by Barnett; 70% of fibers are 1.5 D, 6 mm supplied by EFT and 30% of fibers are 13D, ½" supplied fibers by Barnett; and 70% of 1.5 D, 10 mm fibers supplied by EFT and 30% of fibers are 13D, ½" supplied fibers by Barnett.

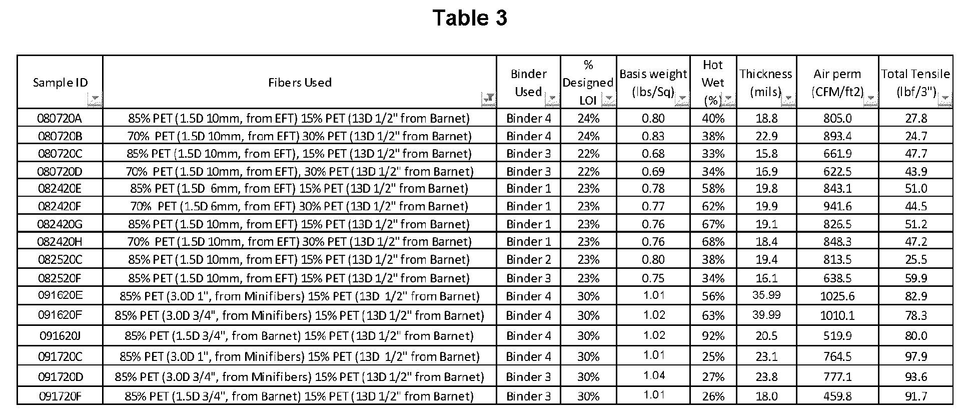

As stated above, blending fibers can make the mat stiffer (e.g., greater tensile strength) while still providing good uniformity. However, blending fibers that are too short may not provide this benefit. For example, samples 080720C and 080720D are mats with good uniformity, however their tensile strength is low due to the small length (10 mm) of a majority of the fibers used. On the other hand, sample 091720D has a great combination of good strength and uniformity. This confirms again that mats with 3.0D, %" (or 18 mm) PET fibers provide good tensile strength and uniformity.

### II. EXAMPLE BATTERY CELL

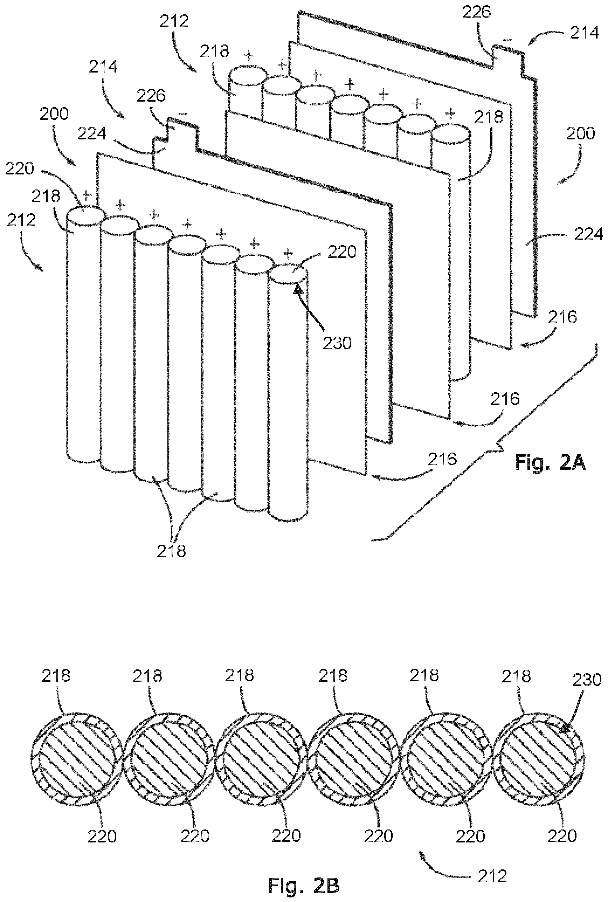

FIG. 2A depicts an exploded view of an example of two lead-acid battery cells 200. Each cell 200 may provide voltage to power an appliance (e.g., car, lights, radio, etc.). Lead-acid batteries may include multiple cells 200 in series or parallel to either increase the voltage or current flow. The cells 200 may include a positive electrode 212 and a negative electrode 214 separated by a battery separator 216. The positive electrode 212 may be formed out of a plurality of gauntlets 218 that houses a positive active material 220 made out of a lead alloy material (e.g., lead dioxide). The gauntlets 218 may be formed in a geometric shape using mat 100 to define chambers 230 that houses a positive active material 220. For example, the gauntlets 218 may form one or more tubes including cylindrical chambers 230 to house the positive active material 220. However, in other embodiments, the gauntlets may form the chambers to be any geometric shapes to house the active material. As illustrated, the gauntlets 218 may be coupled together (e.g., with an adhesive, thread, etc.) in a cartridge belt fashion. For example, the gauntlets 218 may be made of wet-laid, non-woven polymeric fibers that are substantially glassless. In this example, the gauntlets 218 may be formed into the tubular shape without damaging the gauntlets 218 as may be the case where the gauntlets 218 are made of glass fibers.

In some embodiments, the gauntlets 218 and/or active material 220 may couple to a positive terminal (not shown) to facilitate an electrical connection to the negative electrode 214. As illustrated, the negative electrode 214 may be a plate that supports a negative active material 224 (e.g., a lead alloy) that is coated or pasted onto a plate (e.g., conductive plate). To facilitate an electrical connection to the positive electrode 212 the negative electrode 214 may include a negative terminal 226.

An electro-chemical reaction may occur between the positive and negative electrodes 212, 214 when they contact an electrolyte (e.g., sulfuric acid mixed with water). In the chemical reaction (i.e., discharge of the cell 200), the negative electrode 214 may release electrons and the positive electrode 212 may lose electrons as the positive and negative active material 220, 224 changes into lead sulfate. The net positive charge on the positive plate attracts the excess negative electrons from the negative plate producing electricity. The gauntlets 218 may be conductive in order to facilitate the reaction. More specifically, the conductivity of the gauntlets 218 may facilitate electron flow to the positive active material 220 that then attracts ions in the electrolyte during the chemical reaction. Further, the gauntlets 218 being made of wet-laid nonwoven fibers may form the gauntlets to have a more uniform basis weight and thickness, thus allowing for a more even conductivity across the gauntlets 218.

To block electricity from flowing directly between the positive and negative electrodes 212, 214, the cell 200 may include a battery separator 216. As illustrated, the battery separator 216 may be positioned between the positive and negative electrodes 212, 214 to prevent electricity from bypassing the positive terminal and negative terminal 226. However, the battery separator 216 may still enable ionic transport to continue the chemical reaction. In some embodiments, the separator 216 may be a microporous membrane made out of a polymeric film that has negligible conductance. The polymeric film may include micro-sized voids that allow ionic transport (i.e., transport of ionic charge carriers) across the separator 216.

During the chemical reaction the positive and negative active material 220, 224 may expand with the formation of lead sulfate. Similarly, when the battery is recharged the positive and negative active material 220, 224 may contract as the lead sulfate dissolves. Over time the expansion and contraction of the positive and negative material 220, 224 may cause pieces of the positive and negative material 220, 224 to separate from the electrodes 212, 214. The separation of positive and negative material 220, 224 may be referred to as "shedding." To block shedding of the positive active material 220, the positive active material 220 may be wrapped in the gauntlet 218.

FIG. 2B is a cross-sectional top view of an embodiment of a lead-acid battery cell 200. As illustrated, the positive electrode 212 includes positive active material 220 within the gauntlets 218. The material of the gauntlets 218 may have various properties that facilitate the chemical reaction noted above while preventing loss of the positive active material 220.

The gauntlet 218 may include various measurements that result from being the wet-laid, non-woven process discussed below that leads to a greater basis weight uniformity. The gauntlet 218 may include a basis weight between about 100-200 g/m², such as between about 105-180 g/m², between about 110-170 g/m2, or between about 120-160 g/m², or such as between about 120-150 g/m². The gauntlet 218 may include a binder add-on percentage between about 5-30% binder, by weight, such as between about 10-25% or between about 15-20%. The gauntlet 218 may include a fiber diameter between about 10-35 µm, such as between about 12-33 µm, between about 14-31 µm, between about 16-29 µm, between about 18-27 µm, between about 20-25 µm, or between about 22-23 µm . The gauntlet 218 may include between 2.0-5.0 denier, such as between about 2.5-4.5 denier, between about 2.75-4.0 denier, or about 3.0 denier.

### III. EXAMPLE MANUFACTURING PROCESS

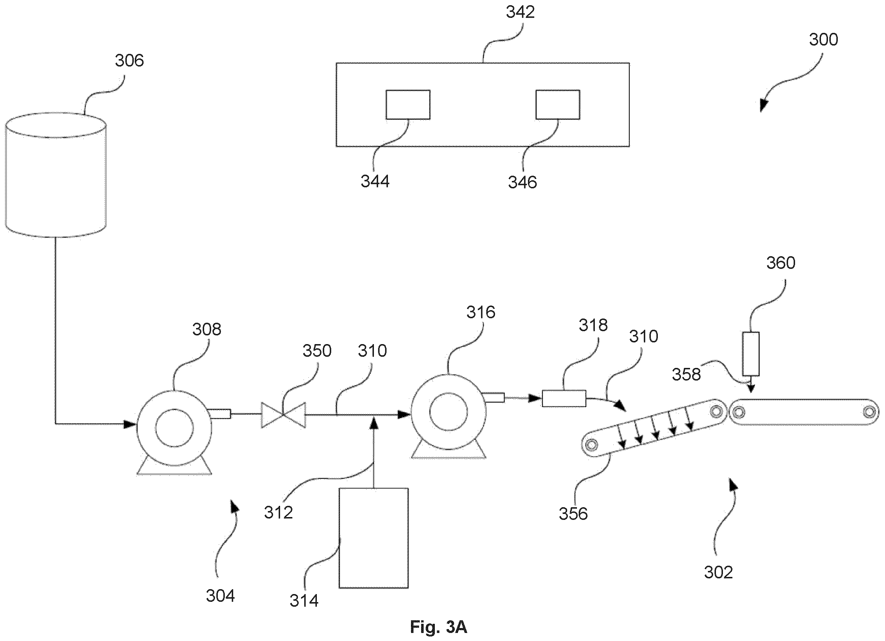

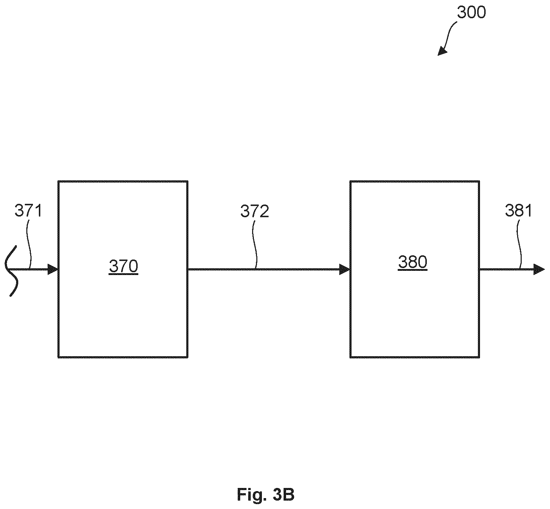

FIGS. 3A and 3B depict a schematic view of a manufacturing system 300 that produces a mat 100 and battery cell 200. Specifically, FIG. 3A depicts the process of manufacturing an uncured substrate and FIG. 3B depicts the process of forming the uncured substrate into a mat 100 and battery cell 200. In operation, the manufacturing system 300 is able to produce a single or multilayered mat 100 in a single step/process and a battery cell 200 with the mat 100. Where the mat 100 is a multilayered mat, the layers of the mat are not separately formed and then combined at a later stage or process (i.e., separately made and then bonded together), but instead are formed homogeneously. Accordingly, a multilayered mat 100 produced by the manufacturing system 300 may therefore be produced at lower cost and in less time.

Turning first to FIG. 3A, the manufacturing system 300 produces an uncured substrate. The manufacturing system 300 may include at least one fluid line that delivers polymeric fibers to a hydroformer 302 that forms each layer of the uncured substrate simultaneously. While a hydroformer 302 is illustrated, a fourdrinier wire or a delta former may also be used to produce the uncured substrate in a single step/process.

In single layer embodiments, the manufacturing system 300 may use a fluid line 304 to deliver polymeric fibers from at least one fiber source 306 to the hydroformer 302. The fiber source 306 may contain one or more types of polymeric fibers (e.g., differently sized polymeric fibers, polymeric fibers made from different materials, or a combination thereof). Fluidly coupled to the fiber source 306 is a pump 308 (e.g., a thick stock pump) that pumps a fluid 310 containing the polymeric fibers. For example, the fluid 310 may include water, viscosity modifiers, dispersants, defoamers, etc. mixed with the polymeric fibers. After passing through the pump 308, the fluid 310 is diluted with a dilution fluid 312 (e.g., water, viscosity modifiers, dispersants, defoamers, or a combination thereof) stored in a dilution tank 314. By diluting the polymeric fibers, the manufacturing system 300 may enable a more even distribution of the polymeric fibers in the uncured substrate by the hydroformer 302. The dilution fluid 312 combines with the fluid 310 before the fluid 310 enters a second pump 316. The pump 316 (e.g., thin stock pump) may facilitate mixing of the fluid 310 and the dilution fluid 312 before delivery to the hydroformer 302. After exiting the pump 316, the fluid 310 enters an inlet pipe 318 of the hydroformer 302. The inlet pipe 318 directs the fluid 310 into the hydroformer 302, which forms the uncured substrate by removing the fluid 310 and dilution fluid 312 from the fluid/coarse fiber mixture as the mixture is poured onto the hydroformer 302.

In embodiments in which the uncured substrate is formed of multiple layers, additional fluid lines are used to supply polymeric fibers from one or more fiber sources (which may be the same or different than fiber source 306) to the hydroformer 302. The polymeric fibers may be pumped within a second fluid (such as water, viscosity modifiers, dispersants, defoamers, etc. mixed with the polymeric fibers) to be diluted with a dilution fluid (e.g., water, viscosity modifiers, dispersants, defoamers, or a combination thereof) stored in an additional dilution tank. The dilution fluid may be combined with the second fluid before the second fluid enters a second pump that enables mixing of the second fluid and the dilution fluid for ma second mixture before delivery to the hydroformer 302. After exiting the second pump, the second mixture enters an inlet pipe of the hydroformer 402. The hydroformer 302 removes the second fluid and dilution fluid from the second mixture as the second mixture is poured onto the hydroformer 302 atop a first layer of the uncured substrate that was immediately formed by the hydroformer 302. The second fluid is directed or poured atop the first layer of the uncured substrate as the fluid is being drained from the first fluid 310 such that the additional layer and the initial layer are formed simultaneously by the hydroformer 302. Additional layers may be formed in a similar manner.

The flow of the fluid 310 (and fluid for additional layers) through the manufacturing system 300 may be controlled with a controller 342. The controller 342 may include one or more processors 344 that execute instructions stored on one or more memories 346 to control the operation of various valves as well as the pumps. For example, one or more valves 350 coupled with the fluid lines may be controlled, which enables the controller 342 to control the amount of various types of polymeric fibers to between 0 and 100 percent in a given layer of the uncured substrate, and more commonly to the percentages described in the mat embodiments herein. Additionally, by controlling the flow of the fluids the controller 342 may increase or decrease thickness of the uncured substrate and/or respective layers thereof.

As the fluids (such as fluid 310) enter the hydroformer 302 the fluids contact a conveyer belt 356 that drains a substantially majority of the fluid fluids leaving behind the polymeric fibers of the one or more layers. The manufacturing system 300 may then apply one or more binders 358. In some embodiments, the binder 358 may include one or more of the binders discussed above. For example, the binder 358 may include resinous binders such as urea formaldehyde, modified urea formaldehyde, acrylic and/or styrene-butadiene resins, modified acrylic resins, among other types of binders. Wetting agents may also be included in the binder, such as glycol ester and the like.

These binders 358 may be stored in one or more binder sources 360. The binder(s) 358 may be applied to the polymeric fibers by moving the polymeric fibers under a spray or waterfall of binder. Any excess binder may then flow through the fibers. In this way, when manufacturing a multilayered uncured substrate, the manufacturing system 300 may bind the fibers in their respective layers as well as bind any layers together without performing multiple binding steps/processes. Stated differently, the manufacturing system 300 may simultaneously bind the fibers in the respective layers and bond the fiber layers together in a single step. The application of the binder(s) 358 to multiple layers simultaneously results in the binder being relatively evenly distributed through and between the various layers without forming or defining a binder layer between the layers. Stated differently, a separate or individual layer of binder is not formed or defined at an interface or boundary between the layers as occurs in conventional systems where the layers are formed individually and combined in a subsequent process. The relatively even distribution of the binder(s) 358 may increase the strength of the uncured substrate and/or reduce issues such as delamination of the layers. In addition, the uncured substrate described herein has a less defined boundary between multiple layers since any layers are simultaneously formed. Rather, the uncured substrate has a relatively gradual transition from the one layer to another layer due to the simultaneous formation of the layers, which may increase the strength and/or reduce issues such as delamination of the layers.

Once the uncured substrate has been formed by the process depicted in FIG. 3A, additional processing steps may be performed to form the mat 100 and the battery cell 200. For example, with reference to the schematic manufacturing process shown in FIG. 3B, the arrow 371 may represent the uncured substrate formed in FIG. 3A entering a curing oven 370 (e.g., along a conveyor belt) where the uncured substrate is heated to a curing temperature and the binder starts to cure. The temperature of the curing oven 370 and the speed that the uncured substrate is fed into the curing oven 370 may be adjusted to control the curing time and temperature of the uncured substrate. In some embodiments, temperature and speed may be set to completely cure the binder such that the uncured substrate cures into the mat 100. However, in other embodiments, the temperature and speed may be set to partially cure the uncured substrate. The uncured substrate may additionally or alternatively be compressed prior to or during the curing stage by being compressed against a plate or the like.

The curing oven 370 may cure the uncured substrate to form the mat 100. The mat 100 may leave the curing oven 370 along the arrow 372. The mat 100 may leave the curing oven 370 to enter a post-processing unit 380 to form the battery cell 200. For example, the post-processing unit 380 may include one or more components and materials to fold and seam/adhere the mat 100 together to form holding sections that each define an enclosed geometry to receive positive active material 220. These holding sections may be thermoformed to a desired geometry, such as a tubular geometry including cylindrical chambers. Accordingly, the mat 100 may be folded, seamed/adhered, and thermoformed into a gauntlet 218 that is ready to receive positive active material 220. The gauntlet 218 may then be packaged and shipped to an end user along arrow 381 to finalize into a battery cell 200 (e.g., to be filled with positive active material 220). However, in other embodiments, the post-processing unit may include more or less components. For example, the post-processing unit may include components and materials to fill the gauntlet and form the battery cell.

Other example wet-laid manufacturing processes may be described in U.S. Patent Application No. 17/145,459 entitled "Polymeric Wet-Laid Nonwoven Mat for Flooring Applications," which is incorporated by reference herein in their entirety.

While several embodiments and arrangements of various components are described herein, it should be understood that the various components and/or combination of components described in the various embodiments may be modified, rearranged, changed, adjusted, and the like. For example, the arrangement of components in any of the described embodiments may be adjusted or rearranged and/or the various described components may be employed in any of the embodiments in which they are not currently described or employed. As such, it should be realized that the various embodiments are not limited to the specific arrangement and/or component structures described herein.

In addition, it is to be understood that any workable combination of the features and elements disclosed herein is also considered to be disclosed. Additionally, any time a feature is not discussed with regard in an embodiment in this disclosure, a person of skill in the art is hereby put on notice that some embodiments of the invention may implicitly and specifically exclude such features, thereby providing support for negative claim limitations.

Having described several embodiments, it will be recognized by those of skill in the art that various modifications, alternative constructions, and equivalents may be used without departing from the spirit of the invention. Additionally, a number of well-known processes and elements have not been described in order to avoid unnecessarily obscuring the present invention. Accordingly, the above description should not be taken as limiting the scope of the invention.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A battery cell, comprising:
a wet-laid nonwoven gauntlet defining a chamber, wherein the wet-laid nonwoven gauntlet comprises:
a plurality of polymeric fibers, wherein:
the plurality of polymeric fibers have a linear mass density of between about 0.5 denier and 13.0 denier;
the plurality of polymeric fibers have a length of between about 5 mm and 50 mm; and
a binder, wherein:
the binder has a binder add-on percentage of between about 5% and 30%; and
the wet-laid nonwoven gauntlet has a basis weight with a coefficient of variation between about 1% and 5%; and
a positive active material housed in the chamber.

2. The battery cell of claim 1, wherein the binder comprises one or both of an acrylic-based binder and a styrene butadiene-based binder.

3. The battery cell of claim 1 or 2, wherein the plurality of polymeric fibers comprise one or more of, acrylic fibers, polyester fibers, preferably PET fibers, and polypropylene fibers.

4. The battery cell of claims 1 to 3, wherein the gauntlet includes a tubular shape defining the chamber.

5. The battery cell of claims 1 to 4, further comprising a negative electrode electrically coupled to the gauntlet.

6. The battery cell of claim 5, wherein the negative electrode includes a plate coupled with a negative active material.

7. The battery cell of claim 5, wherein the negative electrode includes a negative terminal that electronically couples the negative electrode to the gauntlet.

8. The battery cell of claims 5 to 7, further comprising a separator positioned between the negative electrode and the gauntlet, preferably the separator includes a microporous membrane made out of a polymeric film.

9. The battery cell of claims 1 to 8, wherein the gauntlet is one of a plurality of gauntlets, each of the gauntlets coupled together through one of an adhesive or thread.

10. A method of manufacturing a battery cell, comprising:
forming a wet-laid nonwoven gauntlet defining a chamber, wherein the wet-laid nonwoven gauntlet comprises:
a plurality of polymeric fibers, wherein:
the plurality of polymeric fibers have a linear mass density of between about 0.5 denier and 13.0 denier;
the plurality of polymeric fibers have a length between about 5 mm and 50 mm; and
a binder, wherein:
the binder has a binder add-on percentage of between about 5% and 30%; and
the wet-laid nonwoven gauntlet has a basis weight with a coefficient of variation between about 1% and 5%; and
inserting a positive active material in the chamber.

11. The method of claim 10, wherein the binder comprises one or both of an acrylic-based binder and a styrene butadiene-based binder.

12. The method of claim 10 or 11, wherein the plurality of polymeric fibers comprise one or more of acrylic fibers, polyester fibers, preferably PET fibers, and polypropylene fibers.

13. The method of claims 10 to 12, wherein the gauntlet is formed to include a tubular shape defining the chamber.

14. The method of claims 10 to 13, further comprising electrically coupling a negative electrode to the gauntlet.

15. The method of claim 14, wherein the negative electrode includes a plate coupled with a negative active material.

16. The method of claim 14, wherein the negative electrode includes a negative terminal that electronically couples the negative electrode to the gauntlet.

17. The method of claim 14, further comprising positioning a separator between the negative electrode and the gauntlet.

18. The method of claims 10 to 17,
wherein the gauntlet is one of a plurality of gauntlets; and
the method further comprises forming each of the gauntlets through one of an adhesive or thread.

19. A mat, comprising:
a plurality of polymeric fibers, wherein:
the plurality of polymeric fibers have a linear mass density of between about 0.5 denier and 13.0 denier;
the plurality of polymeric fibers have a length of between about 5 mm and 50 mm; and
a binder, wherein:
the binder has a binder add-on percentage of between about 5% and 30%; and
the mat has a basis weight with a coefficient of variation between about 1% and 5%.

20. Use of the mat as claimed in claim 19 for manufacturing a battery cell, said battery cell being in the form of a gauntlet defining a chamber, said chamber housing a positive active material for the battery,
